# EUROPEAN PATENT SPECIFICATION

(11) **EP 1 361 415 B1**
(45) Date of publication and mention of the grant of the patent: **12.09.2012**
(21) Application number: 02010365.1
(22) Date of filing: 07.05.2002
(51) Int. Cl.: G01C 21/26, G01C 21/36, G06F 17/30

(54) **A speech-outputting device for a motor vehicle**
Sprachausgabevorrichtung für ein Kraftfahrzeug
Dispositif de diffusion de messages vocaux pour un vehicule à moteur

(43) Date of publication of application: 12.11.2003
(73) Proprietor: Continental Automotive GmbH, 30165 Hannover (DE)
(72) Inventor: Rudolph, Martin, Dr., 35585 Wetzlar (DE)

(56) References cited:
- WO-A-98/54682
- WO-A-99/06798

## Description

The invention relates to a vehicle system using a method with the following steps, which is generally known from WO 99/06798:
- storing said information items in textual representation in a memory facility by adding to such information items a location marker;
- determining a relevant location of a motor vehicle;
- selecting among said information items as pertaining to said relevant location
- and outputting a selected information item through text-to-speech conversion.

The present inventor has on the one hand recognized the powerful advances made in the storage feasibility of many such information items in a compact textual form and the high-performance representation thereof through text-to-speech conversion. On the other hand, a further recognition has been that imposing the following of a single prescribed such itinerary is an unwanted and unnecessary restriction, especially for persons moving around in a motor vehicle, whereby a virtual travel guide should be created.

In consequence, amongst other things, it is an object of the present invention to augment the above principle to application in a motor vehicle, where the automatic determination of a relevant location could control and synchronize the selecting among the various information items stored.

The invention relates to a system being arranged for implementing a method for controlling a speech-outputting device for along with the following of a particular itinerary by such device presenting information items associated to said itinerary in speech to a user person and to a motor vehicle being provided with an on-board system facility being arranged for implementing such a method.

According to an aspect of the invention, said on-board system of a motor vehicle is characterized by:
- a storage facility for storing said information items as relating to multiple said itineraries in textual representation in a random accessible memory facility located in a motor vehicle by adding to such information items a location marker;
- determining means located in the motor vehicle for determining a relevant location of said motor vehicle;
- selection means located in the motor vehicle for selecting among said information items as pertaining to said relevant location;
- and speech outputting means located in the motor vehicle for outputting a selected information item through text-to-speech conversion.

Whilst executing a machine-guided navigation procedure such system according to the invention is preferably characterized in that said selecting is co-determined by said machine-guided navigation.

Alternatively, said system according to the invention is preferably characterized in that said selecting is co-determined by a navigation procedure actually followed by said user person.

These and further aspects and advantages of the invention will be discussed more in detail hereinafter with reference to the disclosure of preferred embodiments, and in particular with reference to the appended Figures that show:
- Figure 1,: a motor vehicle provided with an on-board system embodiment according to the present invention;
- Figure 2,: a flow chart regarding the implementing of a method embodiment according to the present invention;
- Figure 3,: a storage arrangement for various information items for use with the present invention.

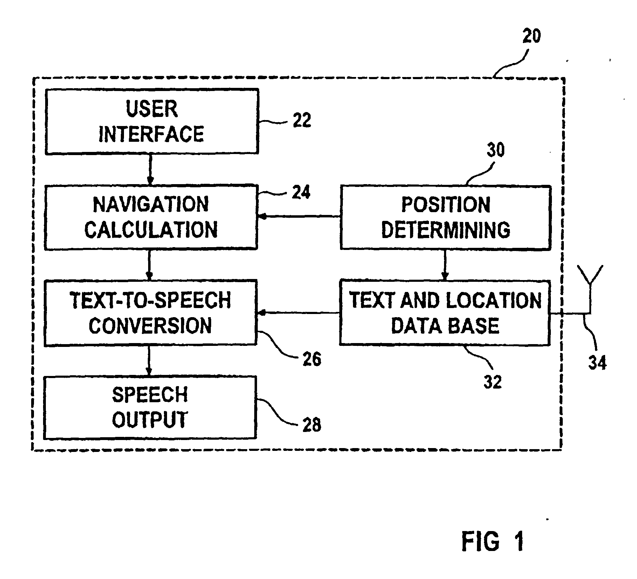

Figure 1 illustrates a motor vehicle provided with an on-board system embodiment according to the present invention. For brevity, the motor vehicle proper 20 has been represented only in a rudimentary manner. The on-board system comprises a user interface 22 that may activate the navigation facility, or set such parameters as will be discussed hereinafter. Block 24 will do navigation calculation, such as by finding an optimum route or loading special predefined "scenic" routes in view of user's wishes inputted through user interface facility 22. The navigation takes into account the actual location of the vehicle as found through position determining facility 30 that may operate through GPS or another procedure. The actual position so found may address text and location data base 32, such as through associating with the information items stored. The outputted information may be addressed by the route actually followed to activate text-to-speech conversion facility 26, for converting text received from storage 32, to thereby generating speech output signals that are effectively outputted by speech output facility 28. The storage in block 32 may be static, or may be updated dynamically through whole or partial external input such as by broadcast receiving on aerial 34. The accessing in storage 32 can be random, which means that there is no single fixed overall sequence wherein the information items need be accessed. Nevertheless, a certain ordering could be provided, such as pertaining to a plurality of location strings along respective routes. The information actually outputted can have various character, such as representing an actual travel guide, and can be filtered according to the user's interest. The speech outputting of the system can proceed even when the route finding facility is deactivated, and navigation is exclusively user-controlled.

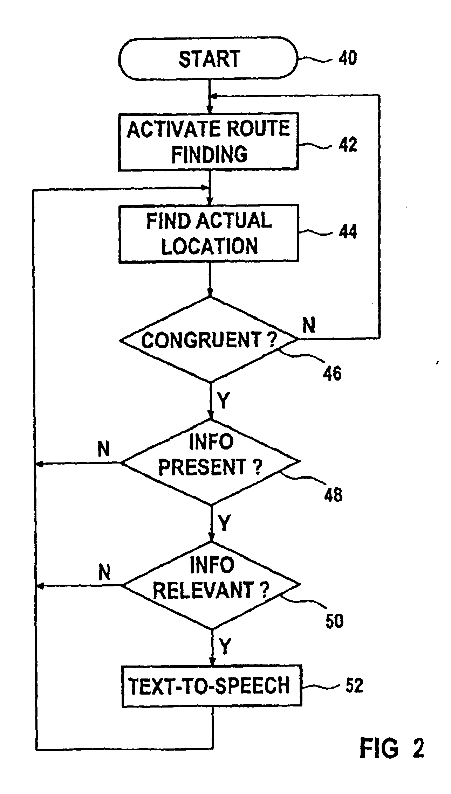

Figure 2 illustrates a flow chart regarding the implementing of a method embodiment according to the present invention. In block 40, the system is activated, such as through assigning the necessary hardware and software facilities. In block 42, the route finding is activated, such as by user inputting of a destination. In block 44, the system undertakes to find the actual location of the vehicle. In block 46, a check as to congruency is effected. The situation can become incongruent if the actual location does not conform to the planned route, or when a certain time limit has been exceeded. If so, the system will revert to block 42, to allow for activating the routefinding again. In many cases, this reactivation will not yield another route; in some situations however, the route will have to be amended. In block 48, the system checks for the presence of text information regarding the actual vehicle position. If not, the system reverts to to block 44. If information is present, the system in block 50 will check whether the invention is effectively relevant. This is done in accordance with certain criteria. A first one will be the ***relevance filtering*** imposed by the user, such as relating to scenic or economic aspects. A second may be a ***level of relevance,*** that may be set higher or lower. If higher, only a few items will pass muster. A third criterion may be based on the ***temporal frequency*** of the informations that will be outputted, such as stating that no more than a certain number of information outputs are allowed per unit of time, so that the number actually is speech dependent. If not relevent, the system reverts to block 44. If relevant, the text-to-speech conversion will be activated in block 52, and the system goes back to block 44.

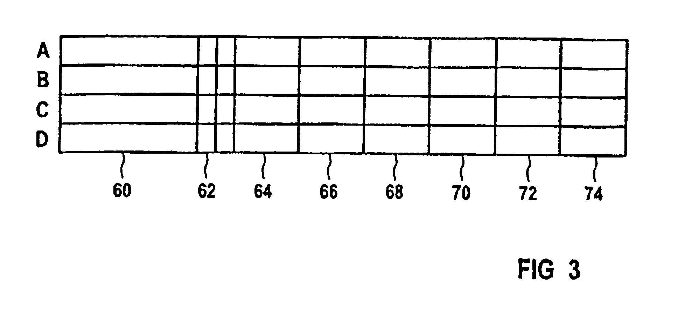

Figure 3 illustrates a storage arrangement for various information items for use with the present invention. In this rudimentary arrangement, only four such information items A, B, C, D have been shown. Each item contains the following parts:
1. The actual location 60 expressed as a location marker, in its geographical coordinates, or alternatively, as mapped on the coordinates for the relevant locations on one or more route sections;
2. In the latter case, a two-bit quantity 62 indicating whether the information items is relevant for each of the two possible directions along the route in question;
3. An information 64 specifying the level of relevance, or the character of the information item in question.
4. The textual content proper 66 through 74 that can contain longer or shorter versions of the information item, or have it filtered according to level of relevance, or similar versions.

The storage may be accessed at random, such as by associating with the location, or in another manner.

Now, the invention has been disclosed with reference to the Figures in connection with the disclosure of preferred embodiments. However, persons skilled in the art will readily recognize various amendments, modifications, and combinations. Therefore, the above disclosure should not be considered as limitative, but rather illustrative, and the due scope of the present invention should be determined from the scope of the Claims appended hereto.

## Claims

1. A on-board system of a motor vehicle (20) for controlling a speech-outputting device (28) for along with the following of a particular itinerary by such device presenting information items associated to said itinerary in speech to a user person, said system being **characterized by**:
- a storage (A, B, C, D) facility for storing said information items as relating to multiple said itineraries in textual representation in a random accessible memory facility located in a motor vehicle (20) by adding to such information items a location marker (60);
- determining means (30) located in the motor vehicle (20) for determining a relevant location (60) of said motor vehicle (20);
- selection means located in the motor vehicle (20) for selecting (30) among said information items (32) as pertaining to said relevant location
- and speech outputting means (28) located in the motor vehicle (20) for outputting a selected information item through text-to-speech conversion (26).

2. A System as claimed in claim 1 being **characterized in that** said selection means are arranged that said selecting is co-determined by a machine guided navigation.

3. A system as claimed in claim 1 being **characterized in that** said selection means are arranged that said selecting is co-determined by a navigation procedure actually followed b a user person.

4. A system as claimed in any preceding claim **characterized in that** the determining means (30) is a GPS device.

## Patentansprüche

1. Bordinternes System eines Kraftfahrzeugs (20) zum Steuern einer Sprachausgabevorrichtung (28) in Verbindung mit der Verfolgung einer bestimmten Reiseroute, indem diese Vorrichtung Informationselemente, die der Reiseroute zugeordnet sind, als Sprache einem Anwender präsentiert, wobei das System **gekennzeichnet ist durch**:
- eine Speichereinrichtung (A, B, C, D), um die Informationselemente in Bezug auf mehrere der Reiserouten in einer Textdarstellung in einer Schreib-Lese-Speichereinrichtung, die sich in einem Kraftfahrzeug (20) befindet, zu speichern, indem solchen Informationselementen eine Ortsmarkierung (60) hinzugefügt wird;
- Bestimmungsmittel (30), die sich in dem Kraftfahrzeug (20) befinden, um einen relevanten Ort (60) des Kraftfahrzeugs (20) zu bestimmen;
- Auswahlmittel, die sich in dem Kraftfahrzeug (20) befinden, um unter den Informationselementen (32) jene auszuwählen (30), die den relevanten Ort betreffen,
- und Sprachausgabemittel (28), die sich in dem Kraftfahrzeug (20) befinden, um ein ausgewähltes Informationselement über eine Text-in-Sprache-Umsetzung (26) auszugeben.

2. System nach Anspruch 1, **dadurch gekennzeichnet, dass** die Auswahlmittel dafür ausgelegt sind, dass die Auswahl mit einer maschinengeführten Navigation gemeinsam bestimmt wird.

3. System nach Anspruch 1, **dadurch gekennzeichnet, dass** die Auswahlmittel dafür ausgelegt sind, dass die Auswahl durch eine Navigationsprozedur, der ein Anwender momentan folgt, gemeinsam bestimmt wird.

4. System nach einem vorhergehenden Anspruch, **dadurch gekennzeichnet, dass** die Bestimmungsmittel (30) eine GPS-Vorrichtung sind.

## Revendications

1. Système embarqué d'un véhicule (20) à moteur pour commander un dispositif (28) d'émission de messages pour, en même temps que le suivi d'un itinéraire particulier par un dispositif de ce genre, présenter des éléments d'informations associés à cet itinéraire dans des messages adressés à une personne utilisatrice, le système étant **caractérisé par** :
- un équipement de mémoire (A, B, C, D) pour mémoriser ces éléments d'information comme se rapportant à ces itinéraires multiples suivant une représentation textuelle dans un équipement de mémoire vive placée dans un véhicule (20) à moteur, en ajoutant à ces éléments d'information un marqueur (60) de localisation ;
- des moyens (30) de détermination placés dans le véhicule (20) à moteur pour déterminer une localisation (60) pertinente de ce véhicule (20) à moteur ;
- des moyens de sélection placés dans le véhicule (20) à moteur pour sélectionner (30) parmi ces éléments (32) d'information ceux appartenant à la localisation pertinente
- et des moyens (28) de sortie de messages placés dans le véhicule (20) à moteur pour émettre un élément d'information sélectionné par une transformation (26) texte à message.

2. Système tel que revendiqué à la revendication 1, **caractérisé en ce que** les moyens de sélection sont conçus de manière à ce que la sélection soit co-déterminée par une navigation guidée par machine.

3. Système tel que revendiqué à la revendication 1, **caractérisé en ce que** les moyens de sélection sont agencés de manière à ce que la sélection soit co-déterminée par une procédure de navigation suivie présentement par une personne utilisatrice.

4. Système tel que revendiqué à l'une quelconque des revendications précédentes, **caractérisé en ce que** les moyens (30) de détermination sont un dispositif GPS.
